# EUROPÄISCHE PATENTSCHRIFT

(11) **EP 1 941 223 B1**
(45) Veröffentlichungstag und Bekanntmachung des Hinweises auf die Patenterteilung: **25.08.2010**
(21) Anmeldenummer: 07819401.6
(22) Anmeldetag: 29.10.2007
(51) Int. Cl.: F26B 5/08, F26B 25/22

(54) **ZENTRIFUGENTROCKNER MIT VERBESSERTER NIR- SPEKTROSKOPIE**
CENTRIFUGE DRYER WITH IMPROVED NIR-SPECTROSCOPY
SÉCHOIR CENTRIFUGE DOTÉ D'UNE SPECTROSCOPIE NIR AMÉLIORÉE

(30) Priorität: 14.11.2006 DE 102006054766
(43) Veröffentlichungstag der Anmeldung: 09.07.2008
(73) Patentinhaber: FIMA Maschinenbau GmbH, 74423 Obersontheim (DE)
(72) Erfinder: SCHMID, Joachim, 74599 Wallhausen (DE)
(74) Vertreter: Hössle Kudlek & Partner
(86) Internationale Anmeldenummer: PCT/EP2007/009359
(87) Internationale Veröffentlichungsnummer: WO 2008/058624

(56) Entgegenhaltungen:
- DE-A1-102004 049 241
- DE-C1- 4 441 350
- DE-U1-202005 009 776
- DE-U1-202005 009 778

## Beschreibung

Die vorliegende Erfindung betrifft einen Zentrifugentrockner mit verbesserter NIR-Spektroskopie. Des weiteren betrifft die vorliegende Erfindung ein Verfahren zum Messen der Feuchtigkeit eines Produkts mittels NIR-Spektroskopie.

Zentrifugentrockner sind im Stand der Technik allgemein bekannt. Sie bieten den Vorteil, ein Produkt in demselben Arbeitsraum sowohl zu zentrifugieren als auch zu trocknen. Sie finden daher insbesondere im pharmazeutischen Bereich Anwendung, wo bei der Herstellung der Produkte höchste Anforderungen an die Reinheit gestellt werden. Auch bei toxischen Produkten ist die Verwendung von Zentrifugentrocknern vorteilhaft, da zwischen dem Schritt des Zentrifugierens und dem Schritt des Trocknens das Produkt nicht transportiert werden muss und somit keine Gefahr einer Kontamination von Anlagen oder Personal besteht.

Beim Trocknen ist es wünschenswert, den Restfeuchtigkeitsgehalt des Produkts messen zu können. Anhand der Messergebnisse kann dann eine Entscheidung darüber getroffen werden, ob der Trocknungsvorgang fortgesetzt werden soll. Aus diesem Grund sind in einem Zentrifugentrockner in der Regel Vorrichtungen zur Feuchtigkeitsmessung vorgesehen.

Um, wie voranstehend erwähnt wurde, die hohen Reinheitsanforderungen einzuhalten bzw. die Gefahr einer Kontamination zu vermeiden, werden bei Zentrifugentrocknern berührungslose Messverfahren bevorzugt. Ein solches Verfahren ist die Nahinfrarot(NIR)-Spektroskopie. Die Feuchtigkeitsmessung mittels NIR-Spektroskopie ist im Stand der Technik allgemein bekannt. Um die NIR-Spektroskopie bei Zentrifugentrocknern anwenden zu können, muss ein optischer Zugang in das Innere der Zentrifugentrommel, d.h. in den Arbeitsraum, bestehen.

Die Druckschrift DE 10 2004 049 241 A1 schlägt daher einen Trockner mit bewegtem Trockenraum, insbesondere einen Zentrifugentrockner zum Trocknen eines Produkts vor, wobei der Trockenraum mindestens ein Fenster aufweist, und der Trockner des weiteren eine NIR-Sonde zur Durchführung einer Feuchtigkeitsmessung an dem Produkt in dem geschlossenen Trockenraum umfasst, wobei die NIR-Sonde außerhalb des Trockenraums angeordnet und in mindestens einer Position des Trockenraums durch das mindestens eine Fenster auf das Produkt ausgerichtet ist. Die Stauscheibe verschließt den Trockenraum dabei an einer Stirnseite und ist axial verfahrbar, um in einer geöffneten Stellung der Stauscheibe das Produkt austragen zu können. In der Stauscheibe ist mindestens ein Fenster vorgesehen, auf das die NIR-Sonde ausgerichtet ist. Die NIR-Sonde wird durch eine mit einem die Stauscheibe umgebenden Gehäuse verbundene Armatur gehalten, wobei die Armatur Mittel zum axialen Verschieben der NIR-Sonde umfasst. Es ist somit eine Einrichtung zum axialen Verschieben der Stauscheibe und eine separate Einrichtung zum axialen Verschieben der NIR-Sonde vorgesehen.

Die DE 10 2004 049 241 A1 beschreibt des weiteren ein Verfahren zur Feuchtigkeitsmessung. Dabei wird das Produkt im Trockenraum getrocknet, wobei der geschlossene Trockenraum rotiert. Der Trockenraum wird dann zum Messen der Restfeuchtigkeit definierten zeitlichen Abständen vorübergehend in einer bestimmten Position angehalten, wobei die Position mittels einer Drehwinkelmessung so bestimmt wird, dass das mindestens eine Fenster der Stauscheibe der NIR-Sonde gegenüberliegt. Das Fenster erstreckt sich nicht über die gesamte Dicke der Stauscheibe, so dass vor dem Fenster eine Art Ausnehmung in der Stauscheibe vorgesehen ist. Wenn die Stauscheibe zum Stillstand gekommen ist, wird die NIR-Sonde nun in diese Ausdehnung verfahren, so dass der axiale Abstand zwischen dem Fenster und der NIR-Sonde kleiner als zwei Millimeter ist. Nun wird mittels der NIR-Sonde die Feuchtigkeitsmessung durchgeführt. Wenn anhand des Messergebnisses die Entscheidung getroffen wird, dass der Trocknungsvorgang fortgesetzt werden muss, wird die NIR-Sonde nun wieder axial zurückverfahren, so dass die Spitze der NIR-Sonde aus der Ausnehmung in der Stauscheibe heraustritt. Dies ist unbedingt notwendig, da die rotierende Stauscheibe sonst die NIR-Sonde zerstören würde. Nachdem die NIR-Sonde zurückverfahren ist, wird der Rotationsvorgang der Zentrifugentrommel und der Trocknungsvorgang erneut in Gang gesetzt. Das Verfahren wird so lang wiederholt, bis die Restfeuchtigkeit niedrig genug ist und das Trocknen beendet werden kann.

Das Dokument DE 20 2005 009778 U1 beschreibt eine Zentrifugenvorrichtung mit verbesserter Prozessanalysetechnologie (PAT), ein Verfahren zum Messen des Feuchtigkeitsgehaltes einer Suspension in einer Zentrifugentrommel und ein Verfahren zur Probenentnahme aus einer zentrifugenvorrichtung. Dazu wird eine Zentrifugenvorrichtung mit einer Antriebswelle , einer an der Antriebswelle angeschlossene Trommel, einem innerhalb der Trommel angeordneten Filter, der einen Arbeitsraum umschließt, einer eine Stirnseite des Arbeitsraums bildenden Stauscheibe, die auf einer Stauscheibenwelle gelagert ist, wobei die Stauscheibe und die Trommel zueinander axial verschiebbar sind, einem Füllelement zum Einfügen einer Suspension in den Arbeitsraum und mit einem die Trommel und den Filter umgegebenen Zentrifugengehäuse vorgesehen. Des weiteren sind in der Stauscheibe vorgesehene Fenster mit zugehörigen Fensterkanälen bereitgestellt, in denen Messeinrichtungen vorgesehen sein können.

Bei Zentrifugentrocknern des Standes der Technik muss die Rotation der Zentrifugentrommel demnach zum Messen des Feuchtigkeitsgehaltes des Produkts angehalten werden. Dies ist jedoch nachteilig für den gesamten Arbeitsprozess des Zentrifugentrockners. Zum einen fällt ein während des Zentrifugierens und Trocknens durch die Rotation der Zentrifugentrommel im Produktraum aufgebauter Produktkuchen bei einem Anhalten der Trommel in sich zusammen, was zu einer Verklumpung des Produkts führen kann. Des weiteren erzeugt das dann am Boden angesammelte Produkt eine Unwucht beim Wiederanfahren der Trommel, was zu erhöhtem mechanischen Verschleiß und Schäden an dem Zentrifugentrockner führen kann. Des weiteren nimmt das Anhalten und Wiederanfahren des Zentrifugentrockners viel Zeit in Anspruch, was in einem unnötig langen Prozess resultiert.

Es besteht demnach ein Bedarf an einem Zentrifugentrockner mit verbesserter NIR-Spektroskopie, bei dem die Feuchtigkeit des Produkts während des Trocknungsvorgangs gemessen werden kann, ohne das die Zentrifugentrommel dafür angehalten werden muss.

Erfindungsgemäß wird daher ein Zentrifugentrockner nach Anspruch 1 und ein Verfahren zum Messen der Feuchtigkeit eines Produkts nach Anspruch 11 vorgeschlagen.

Der erfindungsgemäße Zentrifugentrockner zum Zentrifugieren und Trocknen eines Produkts umfasst eine rotierbare, einen Arbeitsraum umgebende Zentrifugentrommel, die durch eine mindestens ein Fenster aufweisende Stauscheibe verschließbar ist, und eine außerhalb des Arbeitsraums angeordnete NIR-Sonde, die in mindestens einer Position der Zentrifugentrommel durch das mindestens eine Fenster auf das Produkt ausgerichtete ist, wobei die NIR-Sonde in einem axial konstanten Verhältnis relativ zu der Stauscheibe angeordnet ist.

Die von einer NIR-Sonde ausgesendete Strahlung verliert beim Durchqueren von Raumluft schnell an Intensität. Um eine genaue Messung durchführen zu können, sollte die NIR-Strahlung daher maximal einen Weg von etwa 2 mm durch Raumluft zurücklegen. Daher wurden bei Zentrifugentrockner des Standes der Technik Vorrichtungen vorgesehen, um die NIR-Sonde relativ zu der Stauscheibe in axialer Richtung zu verfahren. Auf diese Weise ist es bei Zentrifugentrockner des Standes der Technik möglich, die NIR-Sonde bis auf etwa 1 bis 2 mm an die Stauscheibe heranzufahren, um eine Messung durchzuführen.

Während des Betriebs eines Zentrifugentrockners unterliegt die Stauscheibe in axialer Richtung einem gewissen Maß an Bewegung. Die Stauscheibe ist in axialer Richtung in ihrem geschlossenen Zustand nicht formschlüssig fixiert. Vielmehr wird sie durch eine Hubvorrichtung, in der Regel eine Hydraulikvorrichtung, an die Zentrifugentrommel gepresst. Eine derartige Hydraulik-Hubvorrichtung schließt den Arbeitsraum in der Zentrifugentrommel mittels der Stauscheibe zwar dicht ab, axiale Bewegungen der Stauscheibe können aus den folgenden Gründen jedoch dennoch auftreten.

Zum einen kann während des Zentrifugierens oder Trocknens der Arbeitsraum mit einem Überdruck beaufschlagt werden. Aufgrund dieses Überdrucks, der gegen den Druck der Hydraulikvorrichtung arbeitet, kann die Stauscheibe unter Umständen um wenige Millimeter axial bewegt werden. Zum anderen unterliegt die Produktverarbeitung im Arbeitsraum teilweise hohen Temperaturschwankungen. Durch diese Temperaturschwankungen wird die Zentrifugentrommel erwärmt, was zu einer Ausdehnung der Zentrifugentrommel führt. Wäre die Stauscheibe dabei in axialer Richtung fixiert, würde die Wärmeausdehnung zu Verspannungen im Material der Zentrifugentrommel führen. Eine Hydraulikvorrichtung ist jedoch in der Lage, diese Wärmeausdehnung in einem gewissen Maß auszugleichen, so dass sich auch dadurch die Stauscheibe um wenige Millimeter bewegen kann.

Aufgrund dieser axialen Bewegungsmöglichkeiten der Stauscheibe ist man bei Zentrifugentrocknern des Standes der Technik nicht dazu in der Lage, während des laufenden Zentrifugations- oder Trocknungsvorgangs, d.h. "online" zu messen. Da die Sonde nur etwa 1 bis 2 mm von der Stauscheibe beabstandet ist, stößt die Stauscheibe bei ihrer axialen Bewegung gegen die Sonde und beschädigt oder zerstört sie.

Bei Zentrifugentrocknern des Standes der Technik wird der Trocknungsvorgang daher unterbrochen und die Trommel angehalten, bevor die NIR-Sonde an die Stauscheibe herangefahren wird, um die Feuchtigkeit zu messen.

Bei dem erfindungsgemäßen Zentrifugentrockner weist die NIR-Sonde daher keine eigene Hubvorrichtung auf. Eine axiale Bewegung der NIR-Sonde relativ zu der Stauscheibe ist bei dem erfindungsgemäßen Zentrifugentrockner nicht möglich. Vielmehr ist die NIR-Sonde des erfindungsgemäßen Zentrifugentrockners in einem axial konstanten Verhältnis relativ zu der Stauscheibe angeordnet.

Eine evtl. Bewegung der Stauscheibe aufgrund einer Wärmeausdehnung oder eines erhöhten Innendrucks wird daher ebenfalls von der NIR-Sonde ausgeführt. Der axiale Abstand zwischen der NIR-Sonde und der Stauscheibe bleibt konstant. Die Gefahr einer Beschädigung der NIR-Sonde durch die rotierende Stauscheibe ist somit ausgeschlossen und die Grundvoraussetzung für ein Messen der Feuchtigkeit des Produkts während des laufenden Trocknungsvorgangs, auch "Online"-Messung genannt, ist bereitgestellt.

In einer Ausführungsform der Erfindung ist die NIR-Sonde rotationsfest angeordnet.

Des weiteren umfasst der Zentrifugentrockner eine Ausführungsform eine hydraulische Vorrichtung zum axialen Verfahren der Stauscheibe gemeinsam mit der NIR-Sonde.

In einer Ausführungsform der Erfindung erstreckt sich das Material des Fensters über die gesamte Tiefe der Stauscheibe.

Da die Strahlung der NIR-Sonde auch in dem festen Glasmaterial an Intensität verliert, wurde bei Zentrifugentrocknern des Standes der Technik stets versucht, die Dicke des Fensters in der Stauscheibe so gering wie möglich zu halten. Das Fenster bei einem Zentrifugentrockner des Standes der Technik erstreckte sich daher lediglich über einen Anteil der Gesamttiefe der Stauscheibe ausgehend von dem produktseitigen Ende der Stauscheibe. Bei einer beispielhaften Gesamttiefe der Stauscheibe von 40 mm grenzt das Fenster somit direkt an das Produkt an und erstreckte sich bspw. um 15 mm in die Öffnung hinein. Der restliche Bereich der Öffnung bildet dann entsprechend eine etwa 25 mm tiefe Ausnehmung in der Stauscheibe. Diese Ausnehmung macht jedoch ein Messen der Feuchtigkeit eines Produkts während des Trocknungsvorgangs unmöglich. Da die NIR-Sonde in die Ausnehmung hineinverfahren werden muss, um in ausreichend geringem axialen Abstand von dem sondenseitigen Ende des Fensters angeordnet zu werden, ist ein Rotieren der Stauscheibe während dieses Zeitraums unmöglich. Würde die Stauscheibe in Rotation gebracht werden, während die NIR-Sonde in die Ausnehmung verfahren ist, würde die NIR-Sonde von der Stauscheibe abgerissen werden.

Indem sich erfindungsgemäß das Material des Fensters jedoch über die gesamte Tiefe der Stauscheibe erstreckt, muss die NIR-Sonde nicht in eine Ausnehmung der Stauscheibe zum Messen verfahren werden. Des weiteren wird eine verlustarme Leitung der NIR-Strahlung von der NIR-Sonde zu dem Produkt bereitgestellt.

In einer Ausführungsform der Erfindung kann das Fenster aus Saphirglas hergestellt sein. Saphirglas stellt eine besonders verlustarme Leitung der NIR-Strahlung bereit, so dass Messungen mit hoher Genauigkeit auch bei Stauscheiben mit großer Tiefe gewährleistet werden können. Bei Zentrifugentrocknern des Standes der Technik wurde bisher zumeist Borosilikatglas verwendet, das jedoch einen zu hohen Widerstand aufweist und daher zu schlechten Messergebnissen führt. Durch die erfindungsgemäße Verwendung von Saphirglas wird es besonders einfach möglich, ein Fenster bereitzustellen, das sich über die gesamte Tiefe der Stauscheibe erstreckt.

In einer Ausführungsform der Erfindung ist vorgesehen, dass der axiale Abstand zwischen der NIR-Sonde und der Stauscheibe immer kleiner oder gleich 2 mm ist.

Des weiteren weist die NIR-Sonde mindestens eine Lichtleitfaser auf, die so in der NIR-Sonde angeordnet ist, dass sie unter einem Winkel zur Horizontalen auf das Stauscheibenfenster ausgerichtet ist.

Wie bereits aus dem Stand der Technik bekannt ist, kommt es bei der Aussendung der NIR-Strahlung durch das Fenster in der Stauscheibe zu Reflexionen an der Fensteroberfläche, die dann genau auf die NIR-Sonde zurückfallen, wenn die NIR-Strahlung in einem rechten Winkel auf das Fenster trifft. Daher ist es bereits bekannt, die NIR-Sonde unter einem Winkel zur Horizontalen auf das Stauscheibenfenster auszurichten, damit Reflexionen von der Fensteroberfläche nicht direkt zurück auf die NIR-Sonde geworfen werden. Bei den Zentrifugentrocknern des Standes der Technik stellt sich bei einer Anordnung der NIR-Sonde unter einem Winkel zur Horizontalen jedoch das Problem der Verfahrbarkeit der NIR-Sonde. Da die Verfahrachse der NIR-Sonde dann nicht mehr parallel zur Verfahrachse der Stauscheibe ist, müssen häufig komplizierte mechanische Lösungen zum schrägen Verfahren der NIR-Sonde gegenüber dem horizontalen Verfahren der Stauscheibe gefunden werden.

Erfindungsgemäß ist daher lediglich die mindestens eine Lichtleitfaser der Sonde in der Sonde so angeordnet, dass sie unter einem Winkel zur Horizontalen auf das Stauscheibenfenster ausgerichtet ist. Die NIR-Sonde selbst ist nach wie vor senkrecht zur Stauscheibe ausgerichtet und wird axial parallel zur Rotationsachse der Stauscheibe zusammen mit der Stauscheibe verfahren.

Des weiteren kann vorgesehen sein, dass die NIR-Sonde in einem Fensterkanal angeordnet ist und ein stauscheibenseitiges Ende des Fensterkanals parallel zu der Oberfläche des mindestens einen Stauscheibenfensters ausgerichtet ist.

Durch die Anordnung der NIR-Sonde in einem Fensterkanal, der bis zu den Fenstern der Stauscheibe hinführt, eist eine einfache Führung der Zuleitungen und Kabel zu der NIR-Sonde möglich. Da die NIR-Sonde im Betrieb in dem sogenannten Ringkanal angeordnet ist, in dem der Austrag des Produkts stattfindet, muss gewährleistet sein, dass keinerlei Schmutzpartikel von der NIR-Sonde in den Ringkanal getragen werden. Der Fensterkanal kann daher zusätzlich von einem Metallfaltenbalg umgeben sein, der wiederum mittels septischer O-Ring-Dichtungen abgedichtet ist. Der Metallfaltenbalg ist auf der einen Seite an dem stauscheibenseitigen Ende des Fensterkanals befestigt und auf der anderen Seite an dem starren Gehäuse befestigt, das den sensiblen Produktraum gegenüber der Umgebung abgrenzt. Der Metallfaltenbalg kann daher die axiale Bewegung des Fensterkanals mitmachen und gewährleistet, dass durch die axiale Bewegung des Fensterkanals keinerlei Schmutz in den sensiblen Produktraum getragen wird.

Zur Durchführung des Fensterkanals durch das starre, den Produktraum abgrenzende Gehäuse kann eine Gleitbuchse vorgesehen sein.

Diese Anordnung bietet den Vorteil, dass Schmutzpartikel, selbst wenn sie durch die Gleitbuchse durch das Gehäuse treten sollten, im Inneren des Metallfaltenbalgs eingeschlossen sind und nicht in den Produktraum austreten können.

Es kann vorgesehen sein, dass die NIR-Sonde exzentrisch zur Mitte des mindestens einen Fensters angeordnet ist und die mindestens eine Lichtleitfaser etwa auf die Mitte des Stauscheibenfensters weist.

In der Praxis ist das Problem aufgetreten, dass die unter einem Winkel zur Horizontalen ausgerichtete mindestens eine Lichtleitfaser nicht nur das Produkt, sondern auch Teile der Stauscheibe bestrahlt, wenn die NIR-Sonde mittig zum Fenster axial ausgerichtet ist. Die Reflexionen des in der Regel aus Metall bestehenden Materials der Stauscheibe führt zu schlechten Messergebnissen. Daher ist es von Vorteil, die NIR-Sonde exzentrisch zur Mitte des mindestens einen Fensters anzuordnen, so dass die mindestens eine Lichtleitfaser etwa auf die Mitte des Stauscheibenfensters weist. So wird gewährleistet, dass die NIR-Strahlung nicht von der Stauscheibe zurück auf die NIR-Sonde reflektiert wird.

Des weiteren kann eine Spülvorrichtung zum Spülen des mindestens einen Fensters mittels eines Gases vorgesehen sein, wobei die Spülvorrichtung in dem Fensterkanal angeordnet ist.

Um eine gute Messung zu gewährleisten, muss die Oberfläche des Fensters stets rein gehalten werden. Daher wird eine Spülvorrichtung vorgesehen, um mittels eines Gases, etwa Stickstoff, die Fensteroberfläche abdüsen zu können. Bei der Anordnung der Spülvorrichtung in der NIR-Sonde in dem Fensterkanal ist eine besonders einfach konstruktive Lösung bereitgestellt.

Die Spülvorrichtung kann mindestens eine Öffnung zum Ausdüsen von Gas umfassen, die um die mindestens eine Lichtleitfaser herum angeordnet ist.

Auf diese Weise wird besonders einfach sichergestellt, dass das ausgedüste Gas in erster Linie auf den Bereich des Fensters trifft, durch den die NIR-Sonde Strahlung aussendet und empfängt.

Ein erfindungsgemäßes Verfahren zum Messen der Feuchtigkeit eines Produkts in einem Zentrifugentrockner umfasst eine rotierbare einen Arbeitsraum umgebende Zentrifugentrommel, die durch eine mindestens ein Fenster aufweisende Stauscheibe verschlossen ist, und eine außerhalb des Arbeitsraums angeordnete NIR-Sonde, die in mindestens einer Position der Zentrifugentrommel durch das mindestens eine Fenster auf das Produkt ausgerichtet ist, wobei die NIR-Sonde in einem axial konstanten Verhältnis relativ zu der Stauscheibe angeordnet ist, und umfasst die Schritte des Einbringens des Produkts in den Arbeitsraum, des Zentrifugierens des Produkts, des Trocknen des Produkts, wobei die Zentrifugentrommel rotiert, des Messens der Feuchtigkeit des Produkts mittels der NIR-Sonde, wobei die Zentrifugentrommel rotiert und ein Messvorgang dann ausgeführt wird, wenn das mindestens eine Fenster die NIR-Sonde passiert und die NIR-Sonde durch das Fenster auf das Produkt weist, und des Beendens des Trocknens, wenn die gemessene Feuchtigkeit des Produkts kleiner als eine Soll-Restfeuchtigkeit ist.

Das erfindungsgemäße Verfahren ermöglicht die Messung der Feuchtigkeit eines Produkts "online", d.h. ohne die Notwendigkeit, den Prozess der Produktverarbeitung zu unterbrechen und die Zentrifugentrommel anzuhalten.

Bei dem erfindungsgemäßen Verfahren kann des weiteren vorgesehen sein, dass die Stauscheibe zum Austragen des Produkts zusammen mit der NIR-Sonde axial verfahren wird und der Arbeitsraum dadurch geöffnet wird.

Des weiteren kann vorgesehen sein, dass während des Austragens des Produkts die Feuchtigkeit des Produkts mittels der NIR-Sonde gemessen wird. Dadurch, dass erfindungsgemäß das axiale Verhältnis der NIR-Sonde zu der Stauscheibe konstant ist, ist gewährleistet, dass auch nach dem Öffnen der Stauscheibe die NIR-Sonde in einem Verhältnis zur Stauscheibe steht, das ein Durchführen der Feuchtigkeitsmessung ermöglicht. Auf diese Weise kann vorgesehen sein, bspw. zur Qualitätskontrolle während des Austragens, die Feuchtigkeit des ausgetragenen Produkts zu messen.

Des weiteren kann vorgesehen sein, dass zur Bestimmung einer gemessenen Feuchtigkeit eine Anzahl von Messvorgängen durchgeführt wird und die gemessene Feuchtigkeit durch Auswerten der Anzahl von Messvorgängen mit Hilfe einer Gauß'schen Normalverteilungskurve bestimmt wird.

Bei Messverfahren des Standes der Technik wird der Zentrifugentrockner zum Durchführen des Messvorgangs angehalten. Mittels der NIR-Sonde wurde dann eine verhältnismäßig lange und genaue Messung der Feuchtigkeit durchgeführt.

Bei dem erfindungsgemäßen Verfahren ist eine Messung der Feuchtigkeit jedoch immer nur dann möglich, wenn das mindestens eine Fenster der Stauscheibe die NIR-Sonde so passiert, dass die NIR-Sonde durch das Fenster der Stauscheibe auf das Produkt ausgerichtet ist. Die Messung kann somit nur über einen relativ kurzen Zeitraum erfolgen und ist daher mit einem größeren Fehler behaftet. Aufgrund der hohen Rotationszahl der Zentrifugentrommel und der Möglichkeit, auch mehr als ein Fenster in der Stauscheibe vorzusehen, bspw. drei um jeweils 120° versetzte Fenster, kann eine Vielzahl von kurzen Messungen innerhalb eines kurzen Zeitraums durchgeführt werden. Bspw. erhält man bei einer Drehzahl von 200 Umdrehungen pro Minute und drei um jeweils 120° versetzten Fenstern in der Stauscheibe 600 Messungen pro Minute. Dies entspricht 10 Messungen pro Sekunde bzw. 10 Hz.

Auf diese Weise ist es möglich, eine große Anzahl von einzelnen kurzen Messungen zu erlangen, die zwar für sich genommen eine hohe Fehlertoleranz aufweisen, durch eine statistische Auswertung jedoch einen relativ genauen Messwert bestimmen können, dessen Genauigkeit der einer langen Messung bei stillstehender Stauscheibe entspricht. Die statistische Auswertung der Vielzahl von Messergebnissen kann mittels der Gauß'schen Normalverteilungskurve erfolgen.

Es kann vorgesehen sein, dass die Zentrifugentrommel und die Stauscheibe während der Schritte des Zentrifugierens, des Trocknens und des Messens kontinuierlich rotieren.

Des weiteren kann vorgesehen sein, dass bei dem erfindungsgemäßen Verfahren zu einem beliebigen Zeitpunkt ein Schritt des Reinigens des Stauscheibenfensters ausgeführt wird, in dem mittels einer Spülvorrichtung zum Spülen der Stauscheibe ein Gas auf das mindestens eine Fenster gedüst wird.

Bei den Zentrifugentrocknern des Standes der Technik ist zwar ebenfalls vorgeschlagen, ein Gas auf Fenster einer Stauscheibe aufzudüsen. Dadurch, dass während des Aufdüsens die Rotationsscheibe jedoch stillsteht und darüber hinaus eine Ausnehmung in der Stauscheibe vor dem Fenster vorgesehen ist, wird die Verschmutzung bei Zentrifugentrocknern des Standes der Technik in der Regel jedoch nur aufgewirbelt und lagert sich relativ schnell wieder auf dem Fenster ab. Indem die Stauscheibe während des Messens bei dem erfindungsgemäßen Verfahren rotiert, wird eine ungleich höhere Wirkung durch das aufgedüste Gas auf der Stauscheibe erzielt und das Fenster effektiv freigeblasen, ohne dass sich die Partikel erneut auf dem Fenster absetzen.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Figur 1: zeigt eine Querschnittsansicht eines erfindungs- gemäßen Zentrifugentrockners
- Figur 2: zeigt eine zweite vergrößerte Querschnittsansicht des Bereichs um einen Fensterkanal des erfin- dungsgemäßen Zentrifugentrockners.

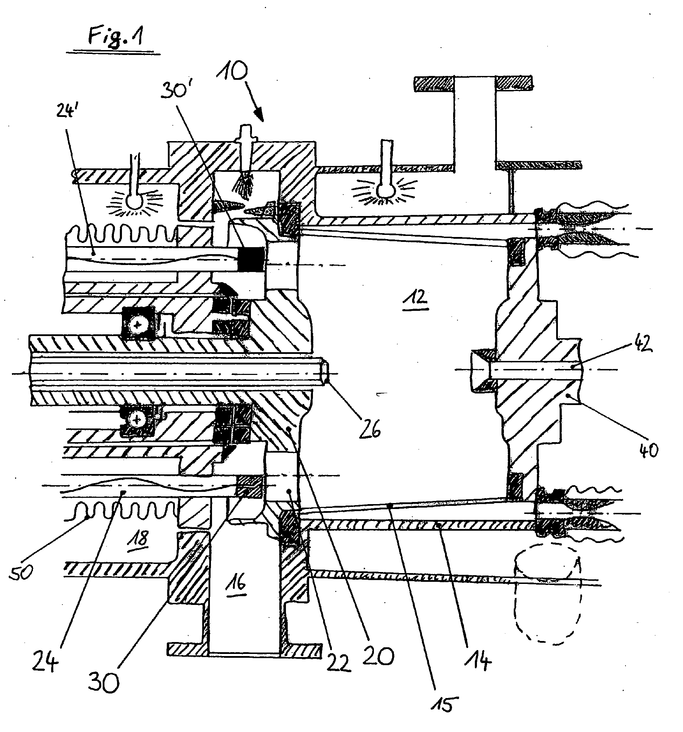

Figur 1 zeigt eine Querschnittsansicht eines erfindungsgemäßen Zentrifugentrockners 10.

Der Zentrifugentrockner 10 umfasst eine Zentrifugentrommel 14, die einen Arbeitsraum 12 umhüllt. In der Zentrifugentrommel 14 ist ein konischer Metallfilter 15 angeordnet.

Die Zentrifugentrommel 14 ist an ihren Stirnseiten zum einen durch einen Trommelboden 40 begrenzt, der rotationsfest mit einer hohlen Antriebswelle 42 verbunden ist, die gleichzeitig als Füllrohr zum Einfüllen eines Produkts in den Arbeitsraum 12 verwendet wird. Die gegenüberliegende Stirnseite der Zentrifugentrommel 14 ist durch eine Stauscheibe 20 verschlossen. Die Stauscheibe 20 ist axial mittels einer Hydraulik-Hubvorrichtung (nicht dargestellt) bewegbar.

Bei geöffneter Stauscheibe kann ein in dem Zentrifugentrockner zentrifugiertes und getrocknetes Produkt aus dem Arbeitsraum 12 in einen Ringkanal 16 ausgetragen und entnommen werden.

Die Stauscheibe 20 weist mindestens ein Stauscheibenfenster 22 auf, das sich über die gesamte Tiefe der Stauscheibe 20 erstreckt. Das Stauscheibenfenster 22 ist aus Saphirglas hergestellt.

In einer Entfernung von maximal 2 mm von der Oberfläche des mindestens einen Stauscheibenfensters 22 ist eine NIR-Sonde 30 zum Messen der Feuchtigkeit des im Arbeitraum 12 zentrifugierten und getrockneten Produkts angeordnet. Die NIR-Sonde 30 ist in einem Fensterkanal 24 angeordnet, dessen stauscheibenfernes Ende in einen unsensiblen Bereich führt, in dem eine Regelungseinheit für die NIR-Sonde 30 angeordnet sein kann.

Generell kann in der Stauscheibe 20 auch mehr als ein Stauscheibenfenster 22 mehr als ein Fensterkanal 24 vorgesehen sein. Ein solcher weiterer Fensterkanal 24' ist in gleicher Weise wie der erste Fensterkanal 24 angeordnet. In einem solchen weiteren Fensterkanal 24' kann eine beliebige Messvorrichtung oder Kameravorrichtung 30' vorgesehen sein. Selbstverständlich kann auch eine weitere NIR-Sonde 30 vorgesehen sein.

Die Stauscheibe 20 ist hohl ausgeführt und weist einen PAT (Prozeßanalysetechnologie)-Kanal in sich auf. In dem PAT-Kanal ist ein rotationsfestes Rohr 26 angeordnet, durch das es grundsätzlich möglich ist, Messvorrichtungen von einem unsensiblen, nicht mit dem Produkt in Berührung kommenden Bereich 19 in den Arbeitsraum 12 einzuführen.

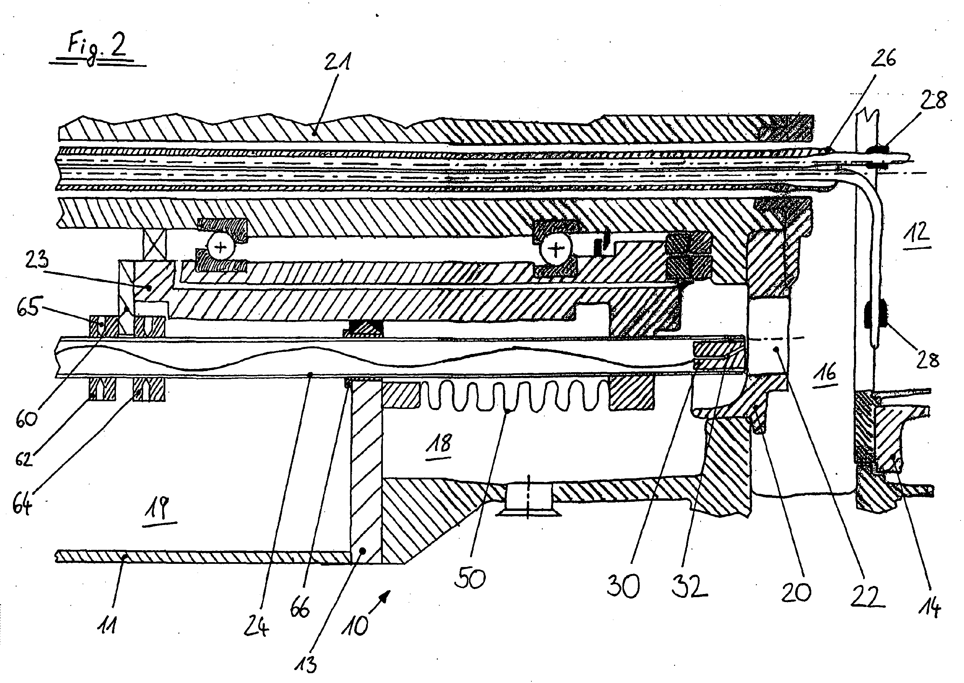

Figur 2 zeigt eine weitere Querschnittsansicht eines erfindungsgemäßen Zentrifugentrockners 10, die die konstruktive Ausgestaltung der Anordnung der NIR-Sonde 30 relativ zu der Stauscheibe 20 verdeutlicht.

In Figur 2 ist die Stauscheibe 20 in einem geöffneten Zustand dargestellt, d.h. ein Produkt kann aus dem Arbeitsraum 12 in den Ringkanal 16 ausgetragen werden.

Des weiteren zeigt die Figur 2 weitere Mess- oder Kameravorrichtungen 28, die durch einen PAT-Kanal in den Arbeitsraum eingeführt sind.

Wie in Figur 2 zu erkennen ist, führt der Fensterkanal 24 von seinem stauscheibenseitigen Ende mit der NIR-Sonde 30 durch einen Bereich 18, den sogenannten Kompensatorbereich, in den unsensiblen, nicht mit dem Produkt in Berührung kommenden Bereich 19, der von dem Zentrifugentrocknergehäuse 11 umgeben ist.

Der Fensterkanal 24 ist mit einem rotationsfesten Element 23 der Stauscheibenwellenlagerung in einem axial festen Verhältnis verbunden. Dazu sind um das kreisförmige Rohr des Fensterkanals 24 zwei Manschetten 62, 64 angeordnet, die mit Stiftschrauben 15 mit dem Fensterkanal 24 verspannt sind. Diese Manschetten 62, 64 klemmen ein Segment 60 des rotationsfesten Elements 23 ein, so dass die axiale Position der NIR-Sonde 30 in dem Fensterkanal 24 relativ zu der Stauscheibe 20 fest ist.

Die Durchführung des Fensterkanals 24 aus dem unsensiblen Bereich 19 in den Kompensatorbereich 18 ist über eine Gleitbuchse 66 vorgesehen. Die Gleichbuchse 66 ist in einem axial festen Gehäuseabschnitt 13 angeordnet. Da es bei der axialen Bewegung des Fensterkanals 24 durch die Gleitbuchse 66 unweigerlich zu Abrieb von kleinsten Teilchen kommt, die nicht mit dem Produkt in Verbindung gelangen sollen, ist der in dem Kompensatorbereich 18 angeordnete Teil des Fensterkanals von einem Faltenbalg, in der Regel einem Metallfaltenbalg, umgeben. Dieser ist gegenüber dem Kompensatorbereich 18 abgedichtet, so dass keinerlei Teilchen aus seinem Inneren heraustreten und mit dem Produkt in Verbindung kommen können.

In der dargestellten Ausführungsform sind die Stauscheibe 20 und die Fensterkanäle 24, 24' von einem Faltenbalg 50 gemeinsam umgeben. Grundsätzlich kann jedoch auch vorgesehen sein, dass jeder Fensterkanal 24, 24' einzeln von einem Faltenbalg 50 umgeben ist.

Durch die dargestellte konstruktive Anordnung der NIR-Sonde 30 ist sichergestellt, dass sie in einem axial festen Verhältnis zur Stauscheibe 20 angeordnet ist und gemeinsam mit der Stauscheibe 20 axial verfahren werden kann.

Eine mindestens eine Lichtleitfaser 32 in der NIR-Sonde 30 ist unter einem Winkel gegenüber der horizontalen zu dem Stauscheibenfenster 22 angeordnet. Das stauscheibenseitige Ende des Fensterkanals steht jedoch parallel zu der Oberfläche des Stauscheibenfensters 22. Um eine Bestrahlung des Metallmaterials der Stauscheibe 20 durch die NIR-Sonde 30 zu verhindern, ist die NIR-Sonde 30 exzentrisch zu der Mitte des Stauscheibenfensters 22, in der dargestellten Ausführungsform radial nach außen versetzt, angeordnet und die Lichtleitfaser 32 auf die Mitte des Stauscheibenfensters 22 ausgerichtet. Durch die Anordnung der mindestens einen Lichtleitfaser 32 in einem Winkel zur Horizontalen wird gleichzeitig sichergestellt, dass Reflexion von der Oberfläche des Stauscheibenfensters 22 nicht auf die NIR-Sonde 30 zurückgeworfen werden und das Messergebnis beeinträchtigen.

In einer alternativen Ausführungsform kann auch vorgesehen sein, dass eine der Mess- bzw. Kameravorrichtungen 28, die durch den PAT-Kanal in den Arbeitsraum 12 eingebracht sind, das Produkt mit NIR-Strahlung bestrahlt und in dem Fensterkanal 24 lediglich die Empfangselemente der NIR-Sonde 30 vorgesehen sind. Auf diese Weise kann ebenfalls die Problematik der Beeinträchtigung des Messergebnisses durch Reflexionen von der Oberfläche des Stauscheibenfensters 22 umgangen werden.

Mittels kreisförmiger Öffnungen (nicht dargestellt) um die mindestens eine Lichtleitfaser 32 herum kann eine Vorrichtung zum Ausdüsen von Gas, vorzugsweise Stickstoff, vorgesehen sein. Auf diese Weise wird eine Spülvorrichtung bereitgestellt, mit der die Oberfläche des Stauscheibenfensters 22 von Verschmutzung gereinigt werden kann, um so eine fehlerfreie Messung zu gewährleisten.

Indem die NIR-Sonde 30 in einem axial konstanten Verhältnis gegenüber der Stauscheibe 20 angeordnet ist und das Stauscheibenfenster 22 sich über die gesamte Tiefe der Stauscheibe 20 erstreckt, ist stets gewährleistet, dass die NIR-Sonde 30 in einem Abstand von 2 mm oder weniger von der Oberfläche des Stauscheibenfensters 22 angeordnet ist. Auf diese Weise wird es möglich, eine Messung selbst dann auszuführen, wenn die Stauscheibe 20 und die Zentrifugentrommel 16 rotieren. Ein Messvorgang wird somit dann ausgeführt, wenn eines der Stauscheibenfenster 22 die NIR-Sonde 30 passiert. Auf diese Weise erhält man eine Anzahl von Messergebnissen, die aufgrund des kurzen Messzeitraums mit einer größeren Fehlertoleranz behaftet sind als ein Messergebnis über einen langen Zeitraum. Aufgrund der großen Anzahl von Messergebnissen kann jedoch mittels einer statistischen Auswertung der Messergebnisse, bspw. einer Analyse mittels der Gauß'schen Normalverteilungskurve, ein zuverlässiges Messergebnis erlangt werden, das die gleiche Genauigkeit erlangt wie eine Messung über einen langen Zeitraum.

Auf diese Weise wird durch den erfindungsgemäßen Zentrifugentrockner der Vorteil bereitgestellt, eine Messung der Feuchtigkeit eines Produkts während des Trocknungsvorgangs "online" durchzuführen, ohne dass der Prozess der Produktverarbeitung dafür angehalten werden muss.

## Patentansprüche

1. Zentrifugentrockner zum Zentrifugieren und Trocknen eines Produkts, mit einer um eine horizontalen Achse rotierbaren, einen Arbeitsraum (12) umgebenden Zentrifugentrommel (14), die durch eine mindestens ein Fenster (22) aufweisende, axial bewegbare Stauscheibe (20) verschließbar ist, und einer außerhalb des Arbeitsraums (12) angeordneten NIR-Sonde (30), die in mindestens einer Position der Zentrifugentrommel (14) durch das mindestens eine Fenster (22) auf das Produkt ausgerichtet ist, **dadurch gekennzeichnet, dass** die NIR-Sonde (30) so angeordnet ist, dass der axiale Abstand zwischen der NIR-Sonde (30) und der Stauscheibe (20) konstant bleibt, und die NIR-Sonde (30) mindestens eine Lichtleitfaser (32) aufweist, die so in der NIR-Sonde (30) angeordnet ist, dass sie unter einem Winkel zur Horizontalen auf das mindestens eine Fenster (22) ausgerichtet ist.

2. Zentrifugentrockner nach Anspruch 1, bei dem die NIR-Sonde (30) rotationsfest angeordnet ist.

3. Zentrifugentrockner nach Anspruch 1 oder 2, mit einer hydraulischen Hubvorrichtung zum axialen Verfahren der Stauscheibe (20) gemeinsam mit der NIR-Sonde (30).

4. Zentrifugentrockner nach einem der Ansprüche 1 bis 3, bei dem sich das mindestens eine Fenster (22) über die gesamte Tiefe der Stauscheibe (20) erstreckt.

5. Zentrifugentrockner nach Anspruch 4, bei dem das Fenster (22) aus Saphirglas hergestellt ist.

6. Zentrifugentrockner nach einem der Ansprüche 1 bis 5, bei dem der axiale Abstand zwischen der NIR-Sonde (30) und der Stauscheibe (20) immer kleiner oder gleich 2 mm ist.

7. Zentrifugentrockner nach einem der Ansprüche 1 bis 6, bei dem die NIR-Sonde (30) in einem Fensterkanal (24) angeordnet ist und ein stauscheibenseitiges Ende des Fensterkanals (24) parallel zu der Oberfläche des mindestens einen Fensters (22) ausgerichtet ist.

8. Zentrifugentrockner nach Anspruch 7, bei dem die NIR-Sonde (30) exzentrisch zur Mitte des mindestens einen Fensters (22) angeordnet ist und die mindestens eine Lichtleitfaser (32) etwa auf die Mitte des mindestens einen Fensters (22) weist.

9. Zentrifugentrockner nach einem der Ansprüche 7 oder 8, bei dem eine Spülvorrichtung zum Spülen des mindestens einen Fensters (22) mittels eines Gases vorgesehen ist, wobei die Spülvorrichtung in dem Fensterkanal (24) angeordnet ist.

10. Zentrifugentrockner nach Anspruch 9, bei dem die Spülvorrichtung mindestens eine Öffnung zum Ausdüsen von Gas umfasst, die um die mindestens eine Lichtleitfaser (32) herum angeordnet ist.

11. Verfahren zum Messen der Feuchtigkeit eines Produkts in einem Zentrifugentrockner (10) mit einer um eine horizontalen Achse rotierbaren, einen Arbeitsraum (12) umgebenden Zentrifugentrommel (14), die durch eine mindestens ein Fenster (22) aufweisende, axial bewegbare Stauscheibe (20) verschließbar ist, und einer außerhalb des Arbeitsraums (12) angeordneten NIR-Sonde (30), die in mindestens einer Position der Zentrifugentrommel (14) durch das mindestens eine Fenster (22) auf das Produkt ausgerichtet ist, wobei die NIR-Sonde (30) so angeordnet ist, dass der axiale Abstand zwischen der NIR-Sonde (30) und der Stauscheibe (20) konstant bleibt, und die NIR-Sonde (30) mindestens eine Lichtleitfaser (32) aufweist, die so in der NIR-Sonde (30) angeordnet ist, dass sie unter einem Winkel zur Horizontalen auf das mindestens eine Fenster (22) ausgerichtet ist, mit den folgenden Schritten:
• Einbringen des Produkts in den Arbeitsraum (12),
• Zentrifugieren des Produkts,
• Trocknen des Produkts, wobei die Zentrifugentrommel (14) rotiert,
• Messen der Feuchtigkeit des Produkts mittels der NIR-Sonde (30), wobei die Zentrifugentrommel (14) rotiert und ein Meßvorgang dann ausgeführt wird, wenn das mindestens eine Fenster (22) die NIR-Sonde (30) passiert und die NIR-Sonde (30) durch das Fenster (22) auf das Produkt ausgerichtet ist,
• Beenden des Trocknens, wenn die gemessene Feuchtigkeit des Produkts kleiner als eine Soll-Restfeuchtigkeit ist.

12. Verfahren nach Anspruch 11, bei dem nach dem Schritt des Trocknens die Stauscheibe (20) zum Austragen des Produkts zusammen mit der NIR-Sonde (30) axial verfahren wird und der Arbeitsraum (12) **dadurch** geöffnet wird.

13. Verfahren nach Anspruch 12, die dem während des Austragens des Produkts die Feuchtigkeit des Produkts mittels der NIR-Sonde (30) gemessen wird.

14. Verfahren nach einem der Ansprüche 11 bis 13, bei dem zur Bestimmung einer gemessenen Feuchtigkeit eine Anzahl von Meßvorgängen durchgeführt wird und die gemessene Feuchtigkeit durch Auswerten der Anzahl von Meßvorgängen mit Hilfe einer Gauß'schen Normalverteilungskurve bestimmt wird.

15. Verfahren nach einem der Ansprüche 11 bis 14, bei dem die Zentrifugentrommel (14) und die Stauscheibe (20) während der Schritte des Zentrifugierens, des Trocknens und des Messens kontinuierlich rotieren.

16. Verfahren nach einem Ansprüche 11 bis 15, bei dem zu einem beliebigen Zeitpunkt ein Schritt des Reinigens des mindestens einen Fensters (22) ausgeführt wird, indem mittels einer Spülvorrichtung zum Spülen des mindestens einen Fensters ein Gas auf das mindestens eine Fenster (22) gedüst wird.

## Claims

1. Centrifuge dryer for centrifuging and drying a product comprising a centrifuge drum (14) rotatable around a horizontal axis and surrounding a working space (12), the centrifuge drum (14) being closable by an axially movable catchment disk (20) having at least one window (22), and an NIR probe (30) arranged outside the working space (12), the NIR probe being aligned with the product through the at least one window (22) in at least one position of the centrifuge drum (14), **characterized in that** the NIR probe (30) is arranged such that the axial distance between the NIR probe (30) and the catchment disk (20) remains constant, and the NIR probe (30) has at least one optical fibre (32) arranged in the NIR probe (30) such that it is aligned at an angle to the horizontal with the at least one window (22).

2. Centrifuge dryer according to claim 1, wherein the NIR probe (30) is arranged rotationally fixed.

3. Centrifuge dryer according to claim 1 or 2, comprising a hydraulic hoisting device for axially translating the catchment disk (20) together with the NIR probe (30).

4. Centrifuge dryer according to any one of claims 1 to 3, wherein the at least one window (22) extends over the entire depth of the catchment disk (20).

5. Centrifuge dryer according to claim 4, wherein the window (22) is made of sapphire glass.

6. Centrifuge dryer according to any one of claims 1 to 5, wherein the axial distance between the NIR probe (30) and the catchment disk (20) is at all times less than or equal to 2 mm.

7. Centrifuge dryer according to any one of claims 1 to 6, wherein the NIR probe (30) is arranged in a window channel (24), and an end of the window channel (24) facing to the catchment disk is aligned in parallel to the surface of the at least one window (22).

8. Centrifuge dryer according to claim 7, wherein the NIR probe (30) is arranged eccentrically with respect to the centre of the at least one window (22), and the at least one optical fibre (32) is directed approximately to the centre of the at least one window (22).

9. Centrifuge dryer according to any one of claims or 8, wherein a rinsing device for rinsing the at least one window (22) by means of a gas is provided, the rinsing device being arranged in the window channel (24).

10. Centrifuge dryer according to claim 9, wherein the rinsing device comprises at least one aperture for ejecting gas, the aperture being arranged around the at least one optical fibre (32).

11. Method for measuring the humidity of a product in a centrifuge dryer (10) comprising a centrifuge drum (14) rotatable around a horizontal axis and surrounding an working space (12), the centrifuge drum (14) being closable by an axially movable catchment disk (20) having at least one window (22), and an NIR probe (30) arranged outside the working space (12), the NIR probe being aligned with the product through the at least one window (22) in at least one position of the centrifuge drum (14), wherein the NIR probe (30) is arranged such that the axial distance between the NIR probe (30) and the catchment disk (20) remains constant, and the NIR probe (30) has at least one optical fibre (32) arranged in the NIR probe (30) such that it is aligned at an angle to the horizontal with the at least one window (22), comprising the following steps:
• introducing the product into the working space (12);
• centrifuging the product;
• drying the product, wherein the centrifuge drum (14) rotates;
• measuring the humidity of the product by means of the NIR probe (30), wherein the centrifuge drum (14) rotates and a measuring process is executed when the at least one window (22) passes the NIR probe (30) and the NIR probe (30) is aligned through the window (22) with respect to the product; and
• completing the drying process when the measured humidity of the product is less than a target residual humidity.

12. Method according to claim 11, wherein after the drying step, for outputting the product, the catchment disk (20) is axially translated together with the NIR probe (30), and the working space (12) is thereby opened.

13. Method according to claim 12, wherein, during the outputting of the product, the humidity of the product is measured by means of the NIR probe (30).

14. Method according to any one of claims 11 to 13, wherein, for determining a measured humidity, a number of measuring processes is executed and the measured humidity is determined by evaluating the number of measuring processes by means of a Gaussian distribution curve.

15. Method according to any one of claims 11 to 14, wherein the centrifuge drum (14) and the catchment disk (20) continuously rotate during the steps of centrifuging, drying and measuring.

16. Method according to any one of claims 11 to 15, wherein a step of cleaning the at least one window (22) is executed at an arbitrary time by ejecting a gas onto the at least one window (22) by means of a rinsing device for rinsing the at least one window (22).

## Revendications

1. Séchoir centrifuge pour centrifuger et sécher un produit, comprenant un tambour de centrifuge (14) en rotation autour d'un axe horizontal et entourant une chambre de travail (12), qui peut être obturé par une plaque d'accumulation (20) axialement mobile et présentant au moins une fenêtre (22), et une sonde NIR (30) agencée à l'extérieur de la chambre de travail (12), qui est orientée vers le produit dans au moins une position du tambour centrifuge (14) à travers ladite au moins une fenêtre (22), **caractérisé en ce que** la sonde NIR (30) est agencée de telle façon que la distance axiale entre la sonde NIR (30) et la plaque d'accumulation (20) reste constante, et la sonde NIR (30) comprend au moins une fibre de guide d'onde (32) qui est agencée dans la sonde NIR (30) de telle façon qu'elle est orientée vers ladite au moins une fenêtre (22) sous un angle par rapport à l'horizontale.

2. Séchoir centrifuge selon la revendication 1, dans lequel la sonde NIR (30) est agencée fixe en rotation.

3. Séchoir centrifuge selon la revendication 1 ou 2, comprenant un dispositif de levage hydraulique pour le déplacement axial de la plaque d'accumulation (20) conjointement avec la sonde NIR (30).

4. Séchoir centrifuge selon l'une des revendications 1 à 3, dans lequel ladite au moins une fenêtre (22) s'étend sur la totalité de la profondeur de la plaque d'accumulation (20).

5. Séchoir centrifuge selon la revendication 4, dans lequel la fenêtre (22) est fabriquée en verre au saphir.

6. Séchoir centrifuge selon l'une des revendications 1 à 5, dans lequel la distance axiale entre la sonde NIR (30) et la plaque d'accumulation (20) est toujours inférieure ou égale à 2 mm.

7. Séchoir centrifuge selon l'une des revendications 1 à 6, dans lequel la sonde NIR (30) est agencée dans un canal de fenêtre (24), et une extrémité du canal de fenêtre (24) du côté de la plaque d'accumulation est orientée parallèlement à la surface de ladite au moins une fenêtre (22).

8. Séchoir centrifuge selon la revendication 7, dans lequel la sonde NIR (30) est agencée de façon excentrique par rapport au milieu de ladite au moins une fenêtre (22), et ladite au moins une fibre de guide d'onde (32) est dirigée environ vers le milieu de ladite au moins une fenêtre (22).

9. Séchoir centrifuge selon l'une des revendications 7 ou 8, dans lequel il est prévu un dispositif de rinçage pour rincer ladite au moins une fenêtre (22) au moyen d'un gaz, ledit dispositif de rinçage étant agencé dans le canal de fenêtre (24).

10. Séchoir centrifuge selon la revendication 9, dans lequel le dispositif de rinçage comprend au moins une ouverture pour l'éjection de gaz, laquelle est agencée tout autour de ladite au moins une fibre de guide d'onde (32).

11. Procédé pour mesurer l'humidité d'un produit dans un séchoir centrifuge (10) comprenant un tambour de centrifuge (14) capable de rotation autour d'un axe horizontal et entourant une chambre de travail (12), qui peut être obturé par une plaque d'accumulation (20) axialement mobile et présentant au moins une fenêtre (22), et une sonde NIR (30) agencée à l'extérieur de la chambre de travail (12) et qui est orientée vers le produit dans au moins une position du tambour centrifuge (14) à travers ladite au moins une fenêtre (22), dans lequel la sonde NIR (30) est agencée de telle façon que la distance axiale entre la sonde NIR (30) et la plaque d'accumulation (20) reste constante, et la sonde NIR (30) comprend au moins une fibre de guide d'onde (32), laquelle est agencée dans la sonde NIR (30) de telle façon qu'elle est orientée vers ladite au moins une fenêtre (22) sous un angle par rapport à l'horizontale, comprenant les opérations suivantes :
- introduction du produit dans la chambre de travail (12),
- centrifugation du produit,
- séchage du produit, pendant lequel le tambour de centrifuge (14) est en rotation,
- mesure de l'humidité du produit au moyen de la sonde NIR (30), pendant laquelle le tambour de centrifuge (14) est en rotation et une opération de mesure est exécutée quand ladite au moins une fenêtre (22) passe devant la sonde NIR (30) et la sonde NIR (30) est orientée vers le produit à travers la fenêtre (22),
- terminaison du séchage quand l'humidité mesurée du produit est inférieure à une humidité résiduelle de consigne.

12. Procédé selon la revendication 11, dans lequel après l'étape de séchage la plaque d'accumulation (20) est déplacée axialement pour l'évacuation du produit, conjointement avec la sonde NIR (30), et la chambre de travail (12) est de ce fait ouverte.

13. Procédé selon la revendication 12, dans lequel pendant l'évacuation du produit l'humidité du produit est mesurée au moyen de la sonde NIR (30).

14. Procédé selon l'une des revendications 11 à 13, dans lequel, pour déterminer une humidité mesurée, en exécute un certain nombre d'opérations de mesure et l'humidité mesurée est déterminée par exploitation du nombre d'opérations de mesure à l'aide d'une courbe de répartition gaussienne normale.

15. Procédé selon l'une des revendications 11 à 14, dans lequel le tambour de centrifuge (14) et la plaque d'accumulation (20) sont continuellement en rotation pendant les étapes de centrifugation, de séchage et de mesure.

16. Procédé selon l'une des revendications 11 à 15, dans lequel à un instant quelconque on exécute une étape de nettoyage de ladite au moins une fenêtre (22) en projetant un gaz sur ladite au moins une fenêtre (22) au moyen d'un dispositif de rinçage pour rincer ladite au moins une fenêtre.
